# EUROPEAN PATENT APPLICATION

(11) **EP 1 083 270 A2**
(43) Date of publication of application: **14.03.2001**
(21) Application number: 00117376.4
(22) Date of filing: 23.08.2000
(51) Int. Cl.: E04F 10/02

(54) **Method for joining contiguous sheets in the manufacture of awnings and sheets thus obtained**

(30) Priority: 10.09.1999 IT MO990184
(71) Applicant: FRA.MA. - S.p.A., 41016 Novi di Modena (Modena) (IT)
(72) Inventor: Manicardi, Giuliano, 42015 Correggio, Reggio Emilia (IT)
(74) Representative: Modiano, Guido, Dr.-Ing.

(57) **Abstract**

A method for joining contiguous sheets for the manufacture of awnings consists in mutually overlapping, over preset widths (5), contiguous edges (2a) of facing sheets (2), in interposing between the overlapping edges (2a) a strip (3) of double-adhesive material or of a material that can be activated so as to have a double-adhesive action, in joining the overlapping edges (2a) by way of activating means (4, 5) adapted to activate the double-adhesive material or material activatable so as to have a double-adhesive action and make it co-operate mechanically with the edges (2a); the sheets (2) obtained with the method according to the invention have, in the region where they overlap and are bonded, an interpenetration of the double-adhesive material or material that can be activated so as to have a double-adhesive action within the fibers of the edges (2a).

## Description

The present invention relates to a method for joining contiguous sheets in the manufacture of awnings and to the sheets thus obtained.

In the manufacture of awnings, contiguous sheets are currently joined, in order to form even large awnings, by overlapping the facing edges and forming a stitched seam between them, optionally using special threads which are highly weather-resistant.

This method is still currently in use and is not devoid of a series of technical problems.

A first problem consists of the fact that, where the joining seams are provided, the overall thickness of the sheet becomes more than double the thickness of each sheet; in practice, if the usual thickness of a sheet is on the order of approximately 1 mm, in seams said thickness increases to 2.5 mm.

This causes in awnings, particularly in awnings which can retract by rolling up on corresponding rollers rotationally actuatable, the formation of unaesthetic wrinkles, with a fishbone pattern, due to the circumferential dimensions which differ in the various regions. In the long term the wrinkles become permanent and cause awnings that are affected by them to be visually unpleasant.

A second problem consists in that the duration of the stitched seams, which even if produced with the greatest care and by using machines and threads being, as mentioned, of a special type, highly weather-resistant and mechanically strong, in any case pierce the weft of the fabrics, altering their optimum warp and possibly even breaking a few of the threads composing the fabric and thus triggering early failure.

A third problem consists in that where required by customers, the awnings, even if they are for protection from the sun, must be fully impermeable to rain or the like, and therefore the seams must be treated by spreading water-repellent materials after forming the seams, with a consequent increase in production costs and in the cost of sale to the public.

The aim of the present invention is to solve the above-mentioned problems of the prior art by providing a method for joining contiguous sheets in the manufacture of awnings, and sheets thus obtained, which allow to manufacture awnings with sheets which are free from wrinkling and tensioning, allows to produce durable seams and optionally, where expressly required, to provide maximum assurance of imperviousness to atmospheric agents.

This aim and other objects are achieved by a method for joining contiguous sheets in the manufacture of awnings, characterized in that it consists in mutually overlapping, over preset widths, contiguous edges of facing sheets, in interposing between the overlapping edges a strip of double-adhesive material or of a material that can be activated so as to have a double-adhesive action, in joining the overlapping edges by way of activating means adapted to activate the double-adhesive material or the material activatable so as to have a double-adhesive action and make it cooperate mechanically with said edges.

Advantageously, the sheets obtained with the method for joining contiguous sheets in the manufacture of awnings have, in the region where said edges overlap and bond, an interpenetration of the double-adhesive material or material that can be activated so as to have a double-adhesive action inside the fibers of the edges.

Further characteristics and advantages will become better apparent from the following detailed description of a preferred embodiment of a method for joining contiguous sheets in the manufacture of awnings and of sheets thus obtained, illustrated only by way of non-limitative example in the accompanying drawings, wherein:

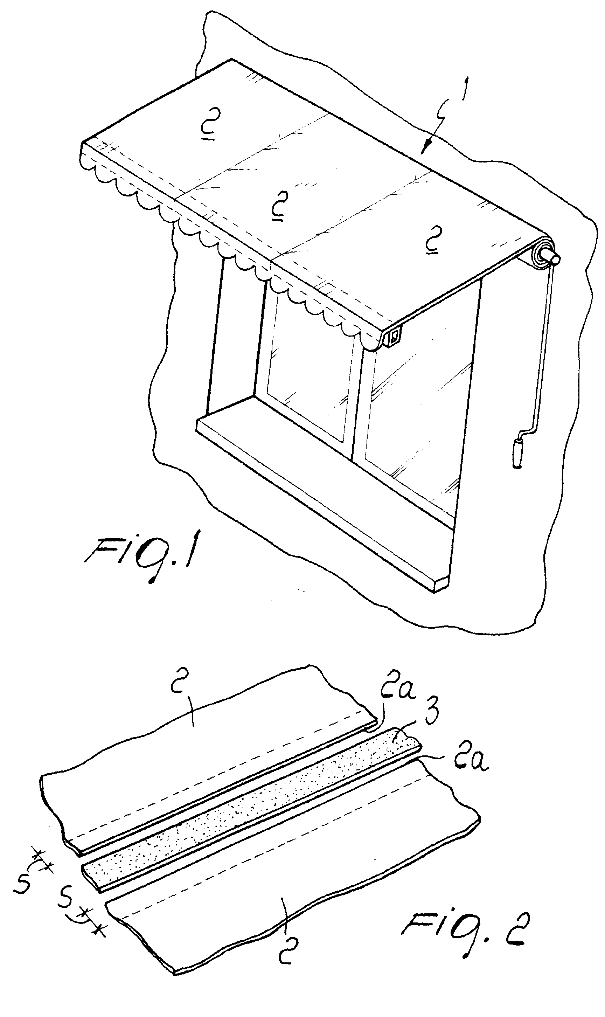

Figure 1 is a schematic perspective view showing a defect which affects a conventional type of awning;
Figure 2 is an exploded view of a portion of the connecting region of two sheets during preparation for overlap;
Figures 3 and 4 are sectional views showing the succession of two steps for joining a portion of two edges of contiguous sheets in the method according to the invention;

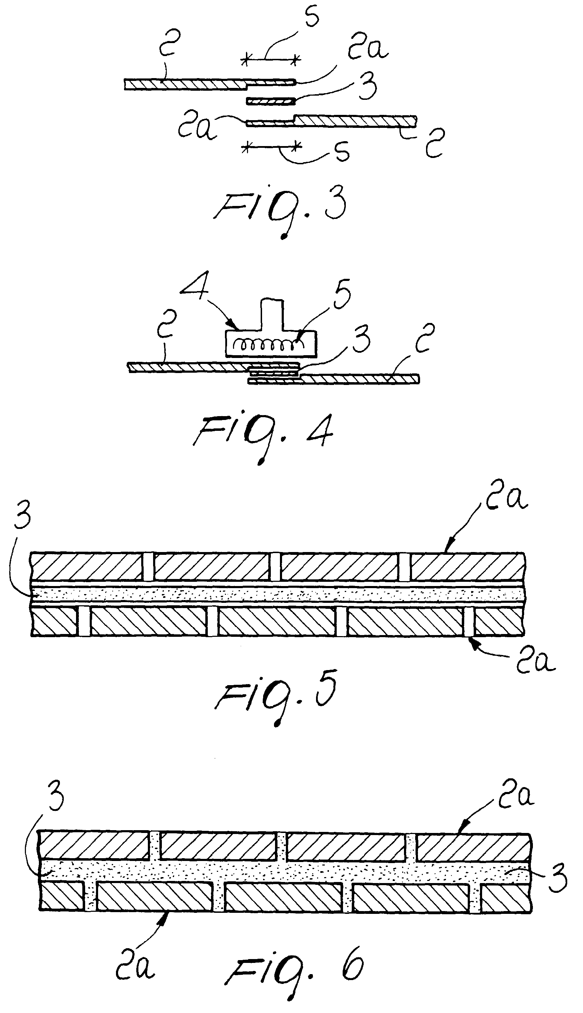

Figures 5 and 6 are highly enlarged-scale views of a portion of the joining region before activation of the double-adhesive material, or of a material that can be activated so as to have a double-adhesive action, and after joining has been completed.

With reference to the above figures, 1 designates an awning which is composed of a series of sheets 2 which are mutually joined.

The sheets are joined along the contiguous and facing edges 2a by overlapping them by a preset thickness "S" and by interposing between the edges 2a and for the thickness "S" a strip 3 of a double-adhesive material, or of material that can be activated so as to have a double-adhesive action.

The strip 3 can be prepackaged in the form of a tape or can be applied by pouring or brushing directly onto one of the edges 2a.

The activation of the material that can be activated so as to have a double-adhesive action occurs by using a presser 4, which is provided with a conventional heating device 5, under which the mutually overlapping edges 2a are arranged.

The combined action of pressing and, if required, heating causes the melting of the double-adhesive material or material that can be activated so as to have a double-adhesive action until it reaches the fluid-plastic state, so that it penetrates in the voids in the weft of the fibers that compose the fabrics of the two edges 2a and, therefore, of the sheets 2, bonding them in a single fabric which is rendered practically monolithic.

Among the materials used, it has been observed that the best performance can be achieved with strips 3 made of polyester or polyurethane having the following exemplifying characteristics:

### Polyester:

-- standard thickness = 0.003"-0.005";
-- hardness = 95 A;
-- melting point = 230-250°F;
-- melt flow = high;
-- activation temperature = 300-350°F;
-- activation pressure = 40-60 PSI;
-- retention time = 3-8 seconds;
-- standard width = 3/8"-30";
-- color = clear

### Polyurethane:

-- standard thickness = 0.001"-0.010";
-- hardness = 95 A;
-- melting point = 160-350°F;
-- melt flow = high;
-- activation temperature = 350-450°F;
-- activation pressure = 40-80 PSI;
-- retention time = 5-10 seconds;
-- standard width = 1/8"-60";
-- color = amber

In practice it has been observed that the above-described invention achieves the intended aim and objects.

The invention thus conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000184 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for joining contiguous sheets for the manufacture of awnings, characterized in that it consists in: mutually overlapping, over preset widths (5), contiguous edges (2a) of facing sheets (2); interposing between said overlapping edges (2a) a strip (3) of double-adhesive material or of a material that can be activated so as to have a double-adhesive action; joining said overlapping edges (2a) by way of activating means (4, 5) adapted to activate said double-adhesive material or said material activatable so as to have a double-adhesive action and make it co-operate mechanically with said edges.

2. The method according to claim 1, characterized in that said strip (3) of double-adhesive material or material that can be activated so as to have a double-adhesive action partially interpenetrates the thickness of said edges (2a) of overlapping facing sheets (2).

3. The method according to claim 1, characterized in that said double-adhesive material or material activated so as to have a double-adhesive action penetrates the fibers of the weft of the fabrics of the edges (2a) that compose the sheets (2).

4. The method according to claim 1, wherein said activating means for activating said material that can be activated so as to have a double-adhesive action are constituted by a presser element (4) which, in said joining step, presses and heats said overlapping edges (2a).

5. The method according to the preceding claims, including choosing said material among a polyester and a polyurethane with a high-level melt flow.

6. The method according to the preceding claims, comprising selecting the overall thickness of said strip of double-adhesive material to be between 0.0005 and 0.15 inches.

7. Sheets obtained with the method according to claim 1, characterized in that they have, in the region where said edges (2a) overlap and bond, an interpenetration of the double-adhesive material or material that can be activated so as to have a double-adhesive action inside the fibers of said edges.
